# EUROPÄISCHE PATENTSCHRIFT

(11) **EP 0 364 998 B1**
(45) Veröffentlichungstag und Bekanntmachung des Hinweises auf die Patenterteilung: **19.06.1996**
(21) Anmeldenummer: 89119401.1
(22) Anmeldetag: 19.10.1989
(51) Int. Cl.: G11B 15/00, G11B 15/02, G11B 33/10, G11B 25/06, G11B 27/34

(54) **Aufnahme-Wiedergabegerät zur lückenlosen Aufzeichnung und/oder Wiedergabe von Nachrichten**
Recording-reproducing apparatus for the gapless recording and/or reproducing of messages
Appareil d'enregistrement-reproduction pour l'enregistrement et/ou la reproduction de façon continue de messages

(30) Priorität: 20.10.1988 DE 3835802
(43) Veröffentlichungstag der Anmeldung: 25.04.1990
(73) Patentinhaber: GRUNDIG E.M.V. Elektro-Mechanische Versuchsanstalt Max Grundig GmbH & Co. KG, D-90762 Fürth (DE)
(72) Erfinder: Mittelstädt, Rainer GRUNDIG E.M.V. Elektro-Mech., Kurgartenstr. 37 D-8510 Fürth/Bay. (DE); Matthäus, Jürgen GRUNDIG E.M.V. Elektro-Mech., Kurgartenstr. 37 D-8510 Fürth/Bay. (DE)

(56) Entgegenhaltungen:
- DE-A- 2 817 682
- DE-A- 2 907 987
- DE-A- 3 039 353
- GB-A- 2 091 928
- GB-A- 2 194 668
- US-A- 4 385 205
- PATENT ABSTRACTS OF JAPAN vol. 9, no. 257 (P-396)(1980) 15 Oktober 1985, & JP-A- 60 106094
- PATENT ABSTRACTS OF JAPAN vol. 8, no. 45 (P-257)(1482) 28 Februar 1984, & JP-A- 58 196643
- PATENT ABSTRACTS OF JAPAN vol. 6, no. 51 (P-108)(929) 06 April 1982, & JP-A- 56 165970

## Beschreibung

Die Erfindung betrifft ein Aufnahme-Wiedergabegerät zur lückenlosen Aufzeichnung und/oder Wiedergabe von Nachrichten nach dem Oberbegriff des Patentanspruchs 1.

In der Vergangenheit sind verschiedene Anlagen für die lückenlose Aufzeichnung und/oder Wiedergabe von Nachrichten vorgeschlagen worden. Allen diesen Anlagen ist gemeinsam, daß zwei voneinander getrennte Aufnahme-Wiedergabegeräte vorgesehen sind, wobei im Aufnahmebetrieb am Ende der Aufnahmedauer des einen Aufzeichnungsmediums vom Benutzer manuell (oder von einer über ein Verbindungskabel mit den beiden Aufnahme-Wiedergabegeräten verbundenen Steuereinrichtung) eine Umschaltung auf das jeweilige andere Aufnahme-Wiedergabegerät vorgenommen wurde.

Aus der DE-PS 30 39 353 ist eine Konferenz-Aufzeichnungsanlage für Tagungs-, Sitzungs- und Gerichtsprotokolle mit zwei über eine Steuereinrichtung verbundenen Tonbandgeräten bekannt. Um eine überlappende Aufzeichnung zu ermöglichen, wird entweder durch ein elektrisches Vor-Endsignal oder durch den Benutzer ein Einschaltimpuls für das zweite Tonbandgerät ausgelöst, ohne daß das erste Tonbandgerät abgeschaltet wird. Die Konferenz-Aufzeichnungsanlage wird dabei während der Laufzeit des zweiten Tonbandes ununterbrochen weiterbetrieben, so daß dem Benutzer für den Bandwechsel genügend Zeit zur Verfügung steht.

Eine solche Lösung weist den Nachteil auf, daß für die jeweils voneinander getrennten Aufnahme-Wiedergabegeräte und deren gemeinsame Steuereinheit ein hoher Schaltungsaufwand und damit hohe Kosten erforderlich sind. Weiterhin ist von Nachteil die umständliche Handhabung der Anlage, wenn die Anlage transportiert und an einem anderen Ort wieder in Betrieb genommen werden soll. So muß sichergestellt werden, daß alle für den Betrieb benötigten Teile (insbesondere Verbindungskabel) auch transportiert werden, um den Anschluß an das Lichtnetz und die Verbindung miteinander vornehmen zu können.

Weiterhin sind automatisch arbeitende Anlagen mit Aufzeichnungs-, Abspiel- und Wechselgeräten für Magnetbandkassetten bekannt, welche eine lückenlose Aufzeichnung und Wiedergabe von Nachrichten ermöglichen (z.B. DE-PS 21 16 028, DE-OS 36 21 790). Die in einem Kassettenmagazin abgelegten Kassetten werden programmgesteuert entnommen und zwei voneinander getrennten Aufnahme-Wiedergabegeräten zugeführt. Den bekannten Anlagen ist nur die Anregung zu entnehmen, zur Steuerung der einzelnen Geräte eine einzige zentrale Steuerelektronik vorzusehen.

Weiterhin ist aus DE-A- 2 907 987 ein Cassetten-Band-System bekannt, bei dem für die lücken lose Auf-Zeichnung mittels einem exakt arbeiten dem Längenmeßgerät die noch verbleibende Band restlänge ermittelt wird und bei einer noch fest zulegenden Band restlänge die Umschaltung auf das zweite Band erfolgt. Dadurch kann es kurzfristig zu gleichen Aufnahmen kommen, um das exakte spätere Schneiden zu ermöglichen.

Schließlich ist aus JP-A- 60 106 094 ein Detektor für die Band restlänge bei einem Videorecorder bekannt. Der Detektor ist derart ausgestaltet, daß durch Vergleich von Band-Ist stand, gewonnen mittels einem Photosensor am Bandwickel, mit einem Referenztakt in einem Mikrocomputer die Band restlänge berechnet wird.

Der Erfindung liegt die Aufgabe zugrunde, ein einziges Aufnahme-Wiedergabegerät derart auszugestalten, daß mit geringem Aufwand eine lückenlose Aufzeichnung von Nachrichten ermöglicht wird.

Diese Aufgabe wird bei einem gattungsgemäßen Aufnahme-Wiedergabegerät durch die kennzeichnenden Merkmale des Patentanspruchs 1 gelöst.

Das erfindungsgemäße Aufnahme-Wiedergabegerät weist den Vorteil auf, daß durch die Mitbenutzung von Funktionseinheiten und deren Funktionsverknüpfung, z.B. Funktionsverknüpfung der Laufwerke über die Steuereinrichtung, der Schaltungsaufwand im Aufnahme-Wiedergabegerät auf überraschend einfache Art und Weise beträchtlich reduziert werden kann. Für den lückenlosen Aufnahme-Wiedergabebetrieb sind keine zwei voneinander getrennten Aufnahme-Wiedergabegeräte mit doppelten Funktionseinheiten, z.B. Stromversorgung, Motorsteuerung usw., mehr erforderlich. Weiterhin konnte durch entsprechende Steuerung dieser Funktionseinheiten auch dem Benutzer die Handhabung wesentlich erleichert werden. Er muß nunmehr nur ein Gerät transportieren, in Betrieb zu nehmen und zu bedienen.

Weist das Aufnahme-Wiedergabegerät gemäß Patentanspruch 2 eine Anzeigeeinheit auf, so kann dieser Bedienkomfort noch weiter verbessert werden. Der Benutzer braucht während des Betriebs nur eine Anzeigeeinheit zu beobachten, um sich über den Betriebszustand und die erforderlichen Maßnahmen zur Steuerung des Aufnahme-Wiedergabegerätes zu informieren.

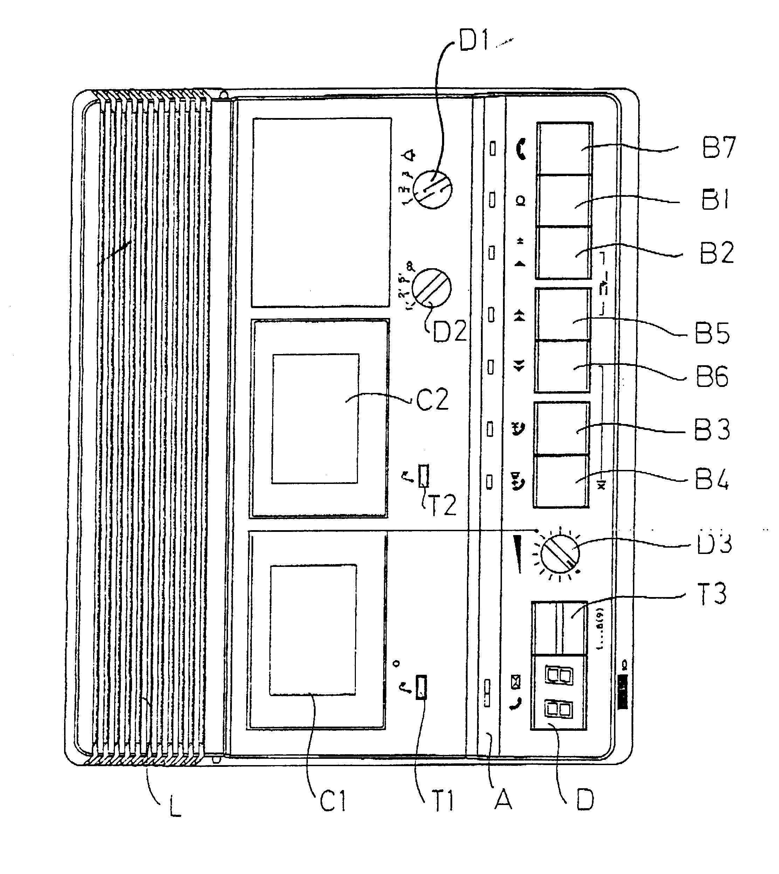

Die Erfindung wird im folgenden anhand einer in der Zeichnung dargestellten Ausführungsform näher beschrieben und erläutert.

Als Aufnahme-Wiedergabegerät wird dabei von einem Telefonanrufbeantworter ausgegangen, welcher zwei voneinander getrennte Laufwerke für eine Ansagekassette und eine Aufzeichnungskassette aufweist. Ohne den Rahmen der vorliegenden Erfindung zu verlassen, können auch andere Aufnahme-Wiedergabegeräte erfindungsgemäß ausgestaltet werden, wenn diese mindestens zwei voneinander getrennte Aufzeichnungsmedien mit entsprechenden Laufwerken aufweisen.

Die Figur zeigt in Draufsicht einen Telefon-Anrufbeantworter mit den Bedienungs- und Anzeigeelementen auf der Oberseite des Gehäuses und den Aufnahmen für Anschlußbuchsen und -steckern auf der Rückseite des Gehäuses. Das flache, pultförmige Gehäuse weist auf der Oberseite im oberen Kühlschlitze auf, welche in einen Lautsprechergrill (mit dahinter angeordnetem Lautsprecher L) übergehen. Davor sind zwei Laufwerke für eine Ansagekassette C1 und eine Aufzeichnungskassette C2 angeordnet. Beide Laufwerke werden mit demselben Motor angetrieben und von einer gemeinsamen Steuereinrichtung aus gesteuert. Vor jedem Kassettenfach ist eine Kassettenfachtaste T1 bzw. T2 angeordnet, welche vom Benutzer zum Kassettenwechseln zu betätigen ist. Neben dem zweiten Kassettenfach sind zwei Drehschalter D1 bzw. D2 angeordnet, mit denen die Rufzeichenauswertung, d.h. Anrufbeantwortung nach dem ersten, zweiten oder dritten Ruf und die maximale Aufzeichnungszeit, d.h. eine Minute, zwei Minuten, fünf Minuten oder unbegrenzt vom Benutzer eingestellt werden kann.

Vor den beiden Kassettenfächern sind in einer Zeile verschiedene Anzeigeelemente A angeordnet, mit welchen beispielsweise eine Anrufanzeige, eine Nachrichtenanzeige oder eine Betätigung der Bedienelemente B1 bis B7 dem Benutzer optisch signalisiert wird.

Im unteren Bereich auf der Oberseite des Telefonanrufbeantworters ist eine Anzeigeeinheit D angeordent, welche zur Textwahlanzeige, Anruf- und Nachrichtenzählung, Anzeige der Restspielzeit, von Fehlern, Code, Bandpositionierung, Zeit- und Bedienerführung und zur Pegelaussteuerungsanzeige dient. Neben der Anzeigeeinheit D ist eine Textwahl- und Textanzeigetaste T3 zur Auswahl zwischen verschiedenen Ansagetexten bzw. Sondertexten vorgesehen. Neben dieser Taste T3 ist ein Lautstärkeregler D3 zur Einstellung der Lautstärke bei Wiedergabe und Mithören angeordnet. Zur Steuerung der verschiedenen Betriebsfunktionen des Telefon-Anrufbeantworters in den verschiedenen Betriebsarten z.B. "Nur-Anrufbeantwortung"; "Anrufbeantwortung mit Aufzeichnung und Fernabfrage"; "Abhören aufgezeichneter Nachrichten"; "Diktierbetrieb" und "Konferenzbetrieb" sind vom Benutzer die entsprechenden Bedienelemente (D1 bis D3, T1 bis T3, B1 bis B7) zu betätigen.

Die Funktionsweise des erfindungsgemäßen Aufnahme-Wiedergabegeräts in der Betriebsart "Konferenzbetrieb" wird im folgenden näher beschrieben und erläutert.

Mit dem Bedienelement B7 wird das Aufnahme-Wiedergabegerät eingeschaltet und die Betriebsart gewählt. Über einen Mikrofonverteiler (Mischpult) können beispielsweise vier Mikrofone zusammengekoppelt und an das Aufnahme-Wiedergabegerät angeschaltet werden. Über die Tasten B1 und B2 wird das erste Laufwerk zur Aufnahme gestartet und das Tonsignal auf der ersten Kassette C1 aufgezeichnet. Die im Aufnahme-Wiedergabegerät angeordnete Steuereinrichtung leitet aus der Umdrehungsgeschwindigkeit des Wickelantriebs des ersten Laufwerks die Steuerbefehle zum Einschalten und Umschalten auf das zweite Laufwerk ab. Dadurch können spezielle Einrichtung zum Erzeugen eines Vor-Endsignals enfallen oder das Aufbringen einer Markierung auf dem Magnetband der Kassette ist dadurch nicht notwendig. Die Steuereinrichtung schaltet gegen Bandende automatisch das zweite Laufwerk hinzu, wodurch eine Doppelaufnahme auf beiden Aufzeichnungskassetten C1 und C2 vorgenommen wird. Nach einer Überlappungszeit von beispielsweise einer Minute wird von der Steuereinrichtung das erste Laufwerk abgeschaltet und nur für das zweite Laufwerk bleibt die Funktion "Aufnahme und Start" weiter bestehen.

Durch einen entsprechenden Hinweis an der Anzeigeeinrichtung D, z.B. durch eine blinkende Anzeige, wird der Benutzer zum Kassettenwechseln der im Kassettenfach eingelegten Kassette C1 aufgefordert. Zusätzlich kann neben dieser optischen Signalisierung ein akustischer Hinweis (Tonsignal) über den Lautsprecher L an den Benutzer erfolgen. Der Benutzer betätigt zum Kassettenwechseln die Kassettenfachtaste T1, entnimmt die bespielte Kassette C1 und legt eine gelöschte, vorzugsweise an den Bandanfang zurückgespulte Kassette in das Kassettenfach ein. Während des Kassettenwechsels wird weiterhin die Aufnahme auf der Kassette C2 fortgesetzt. Gegen Bandende der vom zweiten Laufwerk angetriebenen Kassette C2 wird nunmehr das erste Laufwerk wieder zugeschaltet, eine überlappende Aufnahme vorgenommen und nach einer bestimmten Überlappungszeit wird wieder das zweite Laufwerk abgeschaltet, während das erste Laufwerk weiterhin in Aufnahmefunktion bleibt. Dieses Wechselspiel wiederholt sich solange, solange die Aufzeichnung vorgenommen werden soll. Die bespielten Kassetten können nachträglich zur schriftlichen Protokollierung in das Aufnahme-Wiedergabegerät eingelegt werden, welches nunmehr in der Betriebsart "Diktierbetrieb" betrieben wird.

Auch für das Mitschneiden von Telefonkonferenzen kann in der oben beschriebenen Verfahrensweise vorgegangen werden, wobei hierzu vom Benutzer die entsprechenden Bedienelemente B3 und B4 zu betätigen sind. Mit dem ersten Laufwerk kann dabei die richtige Anschaltung bei einem Probelauf mit Pegelaussteuerungsanzeige an D kontrolliert werden, mit den Bedienelementen B5 und B6 kann die gewünschte Aufzeichnungsstelle auf der Kassette C1 angefahren werden und durch das Betätigen des Bedienelements B2 kann die Probeaufnahme mit dem im Aufnahme-Wiedergabegerät eingebauten Lautsprecher L abgehört werden.

Das erfindungsgemäße Aufnahme-Wiedergabegerät ist vielfältig einsetzbar, erfordert für eine lückenlose Aufzeichnung und/oder Wiedergabe von Nachrichten einen vergleichsweise geringen Schaltungsaufwand und bietet zudem einen hohen Bedienkomfort.

## Patentansprüche

1. Aufnahme-Wiedergabegerät zur lückenlosen Aufzeichnung und/oder Wiedergabe von Nachrichten mit mindestens zwei Aufzeichnungsmedien, insbesondere Aufzeichnungskassetten, und mit einer Steuereinrichtung zur Umschaltung zwischen zwei Laufwerken,
**dadurch gekennzeichnet**, daß die Laufwerke von demselben Motor angetrieben werden, daß die Steuereinrichtung aus der Umdrehungsgeschwindigkeit der Wickelantriebe der Laufwerke die Steuerbefehle zum Einschalten und Umschalten der jeweiligen Laufwerke ableitet und daß die Steuereinrichtung zur überlappenden Aufzeichnung der Nachrichten zeitverzögert das jeweilige Laufwerk abschaltet.

2. Aufnahme-Wiedergabegerät nach Anspruch 1, **dadurch gekennzeichnet**, daß mit der Steuereinrichtung eine Anzeigeeinheit verbunden ist, welche zur Kassettenlaufzeitanzeige und zur Benutzerführung dient.

3. Verwendung des Aufnahme-Wiedergabegerät nach Anspruch 1, als Telefonanrufbeantworter und/oder als Diktiergerät.

## Claims

1. A record-playback device for the continuous recording and/or playback of messages, having at least two separate recording media, in particular recording cassettes, and having a control device for switching over between two drives, **characterised in that** the drives are driven by the same motor, that the control device derives the control commands to switch on and change over to the respective drive, from the rotational speed of the take-up drive of the first drive, and that for overlapping recording of the messages the control device switches off the respective drive after a time delay.

2. Record-playback device according to Claim 1, characterised in that an indicator unit, which is used to display the cassette run-time and for user prompts, is connected to the control device.

3. Use of the record-playback device according to Claim 1 as a telephone answering machine and/or dictating machine.

## Revendications

1. Appareil d'enregistrement-reproduction pour l'enregistrement continu et/ou la reproduction continue de messages, comportant au moins deux supports d'enregistrement, notamment des cassettes d'enregistrement, et un dispositif de commande pour réaliser la commutation entre deux dérouleurs de bande, caractérisé en ce que les dérouleurs de bande sont entraînés par-le même moteur, que le dispositif de commande dérive, de la vitesse de rotation du dispositif d'entraînement de bobinage des dérouleurs de bande, les instructions de commande pour le branchement et la commutation des dérouleurs de bande respectifs, et que le dispositif de commande arrête d'une manière retardée le dérouleur de bande respectif, pour l'enregistrement en chevauchement des messages.

2. Appareil d'enregistrement-reproduction selon la revendication 1, caractérisé en ce qu'au dispositif de commande est reliée l'unité d'affichage, qui est utilisée pour l'affichage de temps de déroulement de cassette et pour le guidage de l'utilisateur.

3. Utilisation de l'appareil d'enregistrement-reproduction selon la revendication 1 en tant que répondeur téléphonique et/ou dictaphone.
